(19) Europäisches Patentamt
European Patent Office
Office européen des brevets

(11) Publication number: 0 083 145
A1

# (12) EUROPEAN PATENT APPLICATION

(21) Application number: 82303399.8

(22) Date of filing: 29.06.82

(51) Int. Cl.$^3$: C 04 B 13/24

(30) Priority: 29.12.81 JP 214990/81

(43) Date of publication of application:
06.07.83 Bulletin 83/27

(84) Designated Contracting States:
DE FR GB NL

(71) Applicant: Jyobu Sangyo Kabushiki Kaisha
222, Ouaza-Watarase Kamikawa-mura
Kodama-gun Saitama(JP)

(72) Inventor: Ichiyanagi, Kazuo
1864-1, Shin-machi
Tano-gun Gunma(JP)

(72) Inventor: Tsunehashi, Kouzi
959-1, Kitabori
Honjyo-shi Saitama(JP)

(74) Representative: Ablewhite, Alan James et al,
MARKS & CLERK 57/60 Lincoln's Inn Fields
London WC2A 3LS(GB)

## (54) Method of manufacturing concrete-based products using composite inorganic and organic substances.

(57) A method of manufacturing concrete-based products using composite inorganic and organic substances provides high strength items such as civil engineering piles and poles, sleepers for railways, sound-proofing wall structures, housing panels, and roofing tiles. According to the method, a composition is prepared which contain a concrete base material usually composed of cement, sand, gravel and others, and organic polymer resins such as polystyrene resin and polyacrylic ester resin which is added to the concrete base material in an appropriate portion relative to the given quantity of the cement content. The method involves the various steps that include the mixing and molding, the centrifugal or vibratory shaping, and curing processes. The polymer resin added provides the action of reducing the moisture content, which improves the compressive strength, bending strength and tensile strength of the final product.

EP 0 083 145 A1

# METHOD OF MANUFACTURING CONCRETE-BASED PRODUCTS USING COMPOSITE INORGANIC AND ORGANIC SUBSTANCES

The present invention relates to a method for the manufacture of concrete-based products such as civil engineering or building piles and poles, sleepers for railways, sound-proofing wall structures, panels for house building, roofing tiles, and other similar items, more particularly, the method according to the present invention provides concrete-based products which comprise a concrete base material usually composed of cement, sand and gravel and a certain quantity of a synthetic resin which is added to the concrete base material in a proportion appropriately selected in relation to the quantity of cement contained in the concrete base material. The process for obtaining such products consists of mixing those substances together to form a uniform mixture and shaping the mixture to any of the above-mentioned products by means of the conventional shaping methods such as centrifugal, vibratory, and other shaping methods.

Several methods which are known in the field of the manufacture of the products of the sort disclosed herein are described in the specifications of the Japanese patent applications now published after examination under the publication numbers of Showa 50 (1975) - 23416 and Showa 51 (1976) - 31261, respectively. The products manufactured according to those prior art methods contain a composition made up principally of inorganic substances such as cement, sand, asbestos and others, and any of thermoplastic synthetic resins. The process for the manufacture in one of the prior art methods consists of mixing those substances together to form a mixture and molding the mixture to a shape, and then subjecting it to a curing process under heat. The other method provides a different process in which the same composition is mixed and shaped under heat, and is then placed in a pressure furnace so that it is allowed to harden under the applied pressure and heat. It is to be noted that the first method relies simply and solely upon the utility of the synthetic resins used, and the second method employs the means for mixing and shaping the substances by application of heat and then allowing the shape to harden under an applied pressure.

For the conventional concrete-based products that are thus obtained by using the centrifugal shaping process, it is observed that a slurry is particularly produced in the concrete composition as a result of the centrifugal shaping process, and the production of the slurry influences the composition ratio of the finally shaped product such that the composition ratio does not meet the original design requirements. This imposes problems with the internal finish of the composition as well as environmental pollution problems caused by the need of treating the produced slurry.

Based upon the observation made as above in connection with the prior art manufacturing methods, the present invention provides an improved method which eliminates the use of the means that is usually relied upon during the centrifugal shaping process.

One object of the present invention is therefore to permit the use of the centrifugal or other shaping process under the manufacturing conditions that are completely new and different from those in the prior art methods. The use of any form of the curing process is also permitted because of those manufacturing conditions. The method according to the present invention makes it possible to use the properties of the inorganic and organic substances so effectively that that they can provide the most synergistic effect during the curing process. The products that are thus obtained present good chemical and physical characteristics.

In accordance with the present invention, the composition is prepared to contain a small water-to-cement ratio, and is mixed together while its contents are still soft. Therefore, it provides a good moisture reducing effect and is easy to be worked out so that when the composition is subjected to the centrifugal or vibratory shaping process, it can be allowed to solidify or harden very tightly. During the centrifugal or vibratory shaping process, the synthetic resin substance contained in the composition can also be distributed uniformly within the composition, thus improving the strength of the products.

The composition to be prepared according to the present invention contains an appropriate proportion of a synthetic resin relative to the quantity of cement, which provides the effect of reducing a moisture content. Therefore, the slurry that might otherwise occur particularly following the centrifugal shaping process can advantageously be reduced to a minimum. The composition can thus be shaped to provide a good internal finish having a uniform wall thickness as specified in the design.

An additional feature of the present invention is that the composition is allowed to harden with a desired strength in a less period of time during the steam curing process. This means that the time required to complete the curing process can substantially be reduced to permit an early removal of the shaped product from its mold.

Now, the curing process which takes place in the autoclave is considered. The concrete product that is obtained by the conventional curing process presents a crystalline structure in the form of gel. The product obtained according to the present invention, however, provides a crystalline structure in the form of needles or plates. This crystalline structure cooperates with the added synthetic resin so that both can provide a synergistic effect, thus improving the strength of the product. Thermoplastic synthetic resins to be used with the present invention include polystyrene resins or styrene polymers, for example. When this resin is used, it may be added in its dispersed or powdery form. In this case, when a concrete composition contains one part of cement, two parts of sand, and three parts of gravel as is the usual case, the water-to-cement ratio is usually equal to the range of between 30% and 35%. When a styrene polymer whose concentration corresponds to 10% relative to the cement content is added, the resulting water-to-cement ratio will decrease to substantially 27%. When the concentration corresponds to 20%, the resulting water-to-cement ratio will be reduced further to about 23%. This means that the increase in the quantity of the synthetic resin to be added leads to a greater moisture reduction effect, which improves the workability. Adding 40% concentration polymer to the concrete base material provides similar good results.

The same results are also obtained by using an acrylic ester resin. The concrete composition that contains one part of cement, two parts of sand and three parts of gravel but does not contain any quantity of this resin usually provides 30% to 35% of water-to-cement ratio. When 10% concentration polymer is added with respect to the quantity of the cement content, about 26% of water-to-cement ratio is resulted. For 20% concentration, the ratio decreases to substantially 22%. This also shows that the increasing concentration of the resin to be added produces a greater moisture reducing effect, thus improving the workability of the composition. Similar good results are also obtained by adding 40% concentration resin to the concrete base composition. Comparison is made between the concrete base material containing the above-mentioned resin polymers and the concrete base material containing no such polymers, after both have been shaped by the centrifugal method and then subjected to the steam curing process, or have been subjected to the steam curing process and then to the curing in the autoclave. The results for the new concrete base material are as follows:

| | |
|---|---|
| Tensile strength: | 1.5 to 2.0 times |
| Bending strength: | 1.5 to 2.0 times |
| Compressive strength: | equal to or more than the strength obtained under the curing conditions for the conventional concrete base material |
| Bonding strength: | 4 to 10 times |

In addition to its strength properties shown above, the concrete base material obtained by the present invention provides other good properties as compared to the conventional concrete base material, which include a small water permeability, an impact resistance, a chemical attack resistance, an antifreeze property, and an anti-fusion property. As easily understood from those properties, the present invention is particularly useful and effective in manufacturing those concrete-based products which require a higher tensile strength or a higher bending strength. For example, such concrete-based products include civil engineering concrete poles and piles, fume pipes, sleepers for railways, sound-proofing wall structure, housing panels, roofing tiles, and other similar items.

It is noted, however, that if the composition contains less than 5% of a synthetic resin, the synthetic resin provides a considerably lower additive effect. Similarly, if the composition contains over 40% of a synthetic resin, the product thus obtained exhibits a lower compressive strength. It therefore follows from the above fact that the quantity of a synthetic resin to be added should advantageously range from 5% to 40% and preferably from 10 to 35%; especially 10 to 15%, since the moisture reducing action of the synthetic resin is promoted by the centrifugal shaping and autoclave curing effects. The curing process employed by the present invention should preferably take place at temperature range of 30°C and 80°C for the heat curing process, and at temperature range of 110°C and 190°C for the autoclave curing process. Those curing processes can be employed individually or in combination at the respective temperature ranges. The products thus processed present the desired strength.

BRIEF DESCRIPTION OF THE DRAWINGS

Those and other objects and features of the present invention will become apparent from the following description to be made in connection with the several preferred examples and embodiments shown in the accompanying drawings in which:

FIGS. 1 to 3 are graphical representations of the relationships between changes in the quantity of a polystyrene resin to be added and the corresponding changes in the compressive strength, bending strength and tensile strength, respectively; and

FIGS. 4 to 6 are graphical representations of the relationships between changes in the quantity of an acrylic ester resin and the corresponding changes in the compressive strength, bending strength and tensile strength, respectively, each figure showing two different curves for the different curing processes.

## DETAILED DESCRIPTION OF THE INVENTION

Details of the present invention are presented below by referring to the accompanying drawing. In order to aid in better understanding the background behind the present invention, several experimental cases in which the effects of the present invention have been tested under different conditions are first shown and described.

### CASE 1

This experimental example uses inorganic substances that include cement, sand and gravel, and an organic substance which is a polystyrene resin. The quantities of the inorganic substances are 475 $Kg/m^3$ of cement, 684 $Kg/m^3$ of sand, and 1230 $Kg/m^3$ of gravel. The quantity of the polystyrene resin is selected to 10% by weight relative to the quantity of the cement, and is added to the inorganic substances. Those substances are then mixed together to form a uniform mixture, and water is gradually added to the mixture until it provides 10 ± 2 cm of slump. The mixture composed of the inorganic and organic substances are placed in a mold and subjected to the centrifugal shaping process. The centrifugal shaping process taken place at initial velocity of 2G to 4G (gravitational unit) for a time period of 5 min to 8 min, at medium velocity of 10G to 15G for a time period of 2 min to 5 min, and then at high velocity of 28G to 32G for 5 min to 8 min. After the centrifugal shaping process, the resulting product is subjected to the steam curing process, which takes place in three phases: a rising phase with a temperature of 15$^{\circ}$C per hour for three hours, a constant phase at a maximum constant temperature of 65°C for three to five hours, and then a falling phase with a temperature drop of 10 to 15°C per hour for three to five hours. In order to permit an early removal of the product from its mold, it is placed in its mold during the steam curing process. After the removal, it is placed in an autoclave in which it is subjected to a curing process which also comprises three phases: a rising phase at a temperature rise of up to 60 to 80°C per hour for two to four hours, a constant phase at a maximum constant temperature of 170 to 200°C for three to five hours, and then a falling phase with a temperature drop of 20 to 25°C per hour for six to ten hours. A specimen to be used for compressive strength testing is taken from the product obtained under the above-described manufacturing conditions. The specimen measures 20 cm (ø) x 30 cm (long) x 4 cm (thick). Another specimen is prepared under the same conditions, which is further processed for use in testing its tensile strength and bending strength. The test results are given in Table 1.

Table 1

| Q'ty of polymer to be added (cement x %) | compressive strength ($Kg/cm^2$) | bending strength ($Kg/cm^2$) | tensile strength ($Kg/cm^2$) |
|---|---|---|---|
| 10 | 925 | 177 | 111 |

CASE 2

For the case 2, the experimental conditions are the same as in the case 1, except that the quantity of a polymer to be added is increased to 25% relative to the quantity of the cement. The results are shown in Table 2.

Table 2

| Q'ty of polymer to be added (cement x %) | compressive strength ($Kg/cm^2$) | bending strength ($Kg/cm^2$) | tensile strength ($Kg/cm^2$) |
|---|---|---|---|
| 25 | 960 | 218 | 134 |

CASE 3

The experimental conditions are the same as in the previous cases 1 and 2, except that the quantity of a polymer to be added is further increased to 35% relative to the quantity of the cement. The results are obtained as shown in Table 3.

Table 3

| Q'ty of polymer to be added (cement x %) | compressive strength ($Kg/cm^2$) | bending strength ($Kg/cm^2$) | tensile strength ($Kg/cm^2$) |
|---|---|---|---|
| 35 | 972 | 237 | 151 |

CASE 4

A composition which was used for the experiment in this case is made up of inorganic substances including 520 $Kg/m^3$ of cement, 650 $Kg/m^3$ of sand and 1167 $Kg/cm^3$ of gravel and an acrylic ester resin as organic substance which is added in a proportion of 10% relative to the quantity of the cement content. The composition is mixed together to form a uniform mixture, and water is gradually added until the mixture provide 10 ±2cm of slump. The mixture is then placed in its mold and is subjected to the same centrifugal shaping and steam curing processes as in the case 1. After its removal from the mold, it is allowed to be cured at ambient temperature and is then placed in the autoclave in which the curing process is performed under the same conditions as in the case 1. The results are obtained as given in Table 4.

Table 4

| Q'ty of polymer to be added (cement x %) | steam curing followed by natural curing δ38 | | | steam curing followed by autoclave curing | | |
|---|---|---|---|---|---|---|
| | compressive strength ($Kg/cm^2$) | bending strength ($Kg/cm^2$) | tensile strength ($Kg/cm^2$) | compressive strength ($Kg/cm^2$) | bending strength ($Kg/cm^2$) | tensile strength ($Kg/cm^2$) |
| 10 | 782 | 150 | 87 | 875 | 154 | 100 |

CASE 5

The experiment proceeds in the same manner as in the Case 4, but in this case, the quantity of a polymer to be added is selected to 25% relative to the quantity of the cement content. The results obtained are shown in Table 5.

Table 5

| Q'ty of polymer to be added (cement x %) | steam curing followed by natural curing δ28 | | | steam curing followed by autoclave curing | | |
|---|---|---|---|---|---|---|
| | compressive strength ($Kg/cm^2$) | bending strength ($Kg/cm^2$) | tensile strength ($Kg/cm^2$) | compressive strength ($Kg/cm^2$) | bending strength ($Kg/cm^2$) | tensile strength ($Kg/cm^2$) |
| 25 | 790 | 181 | 125 | 910 | 200 | 131 |

CASE 6

The experiment is performed under the same conditions as in the case 4, except that in this case the quantity of the polymer to be added accounts for 35% in relation to the quantity of the cement content. The results are obtained as shown in Table 6.

Table 6

| Q'ty of polymer to be added (cement x %) | steam curing followed by natural curing δ28 | | | steam curing followed by autoclave curing | | |
|---|---|---|---|---|---|---|
| | compressive strength ($Kg/cm^2$) | bending strength ($Kg/cm^2$) | tensile strength ($Kg/cm^2$) | compressive strength ($Kg/cm^2$) | bending strength ($Kg/cm^2$) | tensile strength ($Kg/cm^2$) |
| 35 | 791 | 215 | 139 | 910 | 218 | 150 |

It has been observed from the various experiments that the centrifugal shaping process should preferably take place at a slower speed for the compositions prepared according to the present invention than for the conventional composition prepared according to the prior art methods. In this case, when the speed is slow enough to provide a uniform distribution of the different substances contained in the composition, it will have a favorable effect on the subsequent processes. After the uniform mixture is obtained during the slow centrifugal shaping process, it is more effective that the mixture is allowed to harden in a shorter period of time during the subsequent centrifugal rotation. It should be noted, however, that the speed and time requirements of the centrifugal shaping process are not limited to those shown above, in which case it is also possible to obtain products that are sufficiently resistant to the compressive, bending and tensile stresses. The important factors that determine those properties of the products obtained according to the present invention are, for example, the uniform distribution of the inorganic and organic ingredients promoted by the centrifugal mixing process, the hydration promoted by the subsequent steam curing process and/or autoclave curing process, the changes that occur in the crystalline forms during those curing processes, and the action of the polymer resins added.

Several preferred embodiments of the present invention which are based on the above described experimental examples are next explained in detail.

EMBODIMENT 1

In the first embodiment, the inorganic composition described in the case 1 is employed in which a 50% by weight aqueous dispersion of a polystyrene resin (25% by weight relative to the quantity of the cement content) is added. The composition is then mixed and stirred sufficiently to produce a raw concrete, which in turn is placed in a mold measuring 350 mm in internal diameter and 10 m long. The mold is next subjected to the centrifugal shaping process and then to the curing process, both under the same conditions as in the case 1. The resulting product is a concrete pole which measures 350 mm in external diamter, 10 m long and 65 mm thick. The concrete pole is tested with respect with the compressive strength and bending strength. The result shows the compressive strength equal to 960 $Kg/cm^2$ and the maximum bending moment of 15.0 tons-m that eventually causes a crack. In con-

tract, for the composition containing the same substances but not containing any polymer, which are subjected to the centrifugal shaping and curing processes under the same conditions, the results show the compressive strength equal to 898 $Kg/cm^2$ and the maximum bending moment equal to 6.5 tons - m. As noted from the above comparison, the composition containing an additional polymer has a slightly greater compressive strength and a maximum bending moment two times greater than the composition containing no additional polymer.

EXPERIMENT 2

In the second embodiment, the composition indicated in the case 4 is employed in which a 40% by weight aqueous dispersion of a polyacrylic ester resin (25% by weight relative to the quantity of the cement content) is added. The composition is then mixed and stirred sufficiently to produce a raw concrete, which in turn is placed in a mold. The mold is next subjected to the centrifugal shaping process and then to the steam curing process, both under the same conditions described in the case 4. The resulting product is then removed from its mold, and is allowed to have a natural curing process at the ambient temperature for a period of 28 days. The final product thus obtained shows a compressive strength of 910 $Kg/cm^2$ and a maximum bending moment of 15.2 tons-m that causes a crack in the product. In contrast, the final product containing the same composition but not containing no polymer is obtained under the same conditions, and the results show the compressive strength of 855 $Kg/cm^2$ and the

maximum bending moment of 6.3 tons - m. The comparison of the two different final products show that the product according to the present invention is improved in particular reference to the maximum bending moment, which is more than two times that of the conventional one.

EMBODIMENT 3

In the third embodiment, a concrete base material is composed of 475 $Kg/m^3$ of cement, 27 $Kg/m^3$ of water, 684 $Kg/m^3$ of sand and 1230 $Kg/m^3$ of gravel, to which a 50% aqueous dispersion of a dispersion polymer selected from the styrene group is added in a proportion of 30% by weight relative to the quantity of the cement content. The composition thus obtained is then mixed and stirred sufficiently to produce a raw concrete material. The concrete material is next placed in a mold for shaping a floor plate measuring 5 cm thick, 30 cm wide and 200 cm long. The concrete material in its mold is allowed to be cured in the ambient environment for 24 hours, after which it is removed from the mold. The resulting product is then placed in the autoclave in which the curing process takes place at 180$^\circ$C for four hours. The final product has a bending strength of 170 $Kg/cm^2$, a compressive strength of 80 $Kg/cm^2$, and a compressive strength of 870 $Kg/cm^2$.

EMBODIMENT 4

In the fourth embodiment, a concrete base material is composed of 520 $Kg/m^3$ of cement, 33 $Kg/m^3$ of water, 650 $Kg/m^3$

of sand and 1167 $Kg/m^3$ of gravel, to which a 40% aqueous dispersion of an acrylic ester polymer resin is added in a proportion of 30% by weight relative to the quantity of the cement content. The resulting composition is then mixed and stirred sufficiently to produce a raw concrete material. The concrete material is next placed in a mold for shaping a sleeper for railways that measures 20 cm thick, 17 cm wide and 200 cm long, and is allowed to be cured at the ambient temperature for 24 hours. At the end of that period, the shaped product is removed from its mold, and is placed in the autoclave in which the curing process takes place at 180°C for four hours. The resulted final product has a bending strength of 160 $Kg/cm^2$, a tensile strength of 70 $Kg/cm^2$, and a compressive strength of 854 $Kg/cm^2$.

Although the present invention has been described by showing the various examples and embodiment thereof, it should be understood that various changes and modifications may further be made without departing from the scope and spirit of the invention.

CLAIMS

1. A method of the manufacture of the high-strength concrete-based products which contain a composition of inorganic substances and organic thermoplastic synthetic resin substances to be added to the inorganic substances and which are obtained by mixing the composition together and molding it into a shape, and then subjecting the shape to the curing process under an applied heat, wherein:-

the quantity of the thermoplastic synthetic resin substance to be added to the inorganic substances is in the range of 5% and 40% relative to the quantity of a cement contained in the inorganic substances; and

the heat curing process in a steam curing process which takes place at temperature range of 30°C and 80°C, or a combination of said steam curing process and an autoclave curing process which takes place at temperature range of 170°C and 200°C following said steam curing process.

2. A method of the manufacture of the high-strength concrete-based products as defined in Claim 1, wherein the synthetic resin is added in the form of a resin unit or resin dispersion.

3. A method of the manufacture of the high-strength concrete-based products as defined in Claim 1, wherein the thermoplastic synthetic resin substances include any one selected from the group consisting of styrene resins or acrylic ester resins in the form of monomers, co-polymers or polyphase polymers, or a combination of any ones selected from each of said groups, and contain a functional group.

4. A method of the manufacture of the high-strength concrete-based products as defined in Claim 1, wherein the inorganic substances include any kind of cement, and any one or a combination of sand, silica sand, clay, lime, glass powder, calcium carbide, blast furnace slag and gravel.

5. A method of the manufacture of the high-strength products as defined in Claim 1, wherein the composition is shaped by using the centrifugal, vibratory, or other shaping method.

FIG. 1

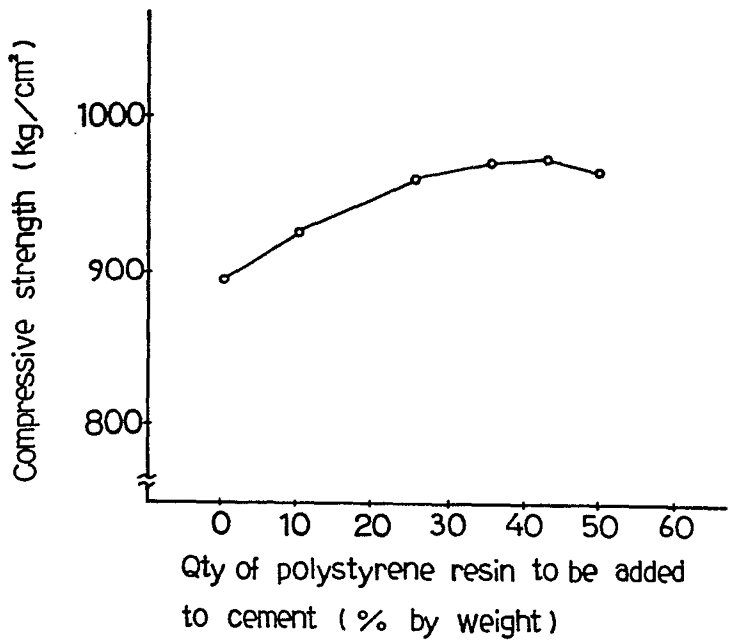
Compressive strength (kg/cm²)
1000
900
800
0
10
20
30
40
50
60
Qty of polystyrene resin to be added
to cement (% by weight)

FIG. 2

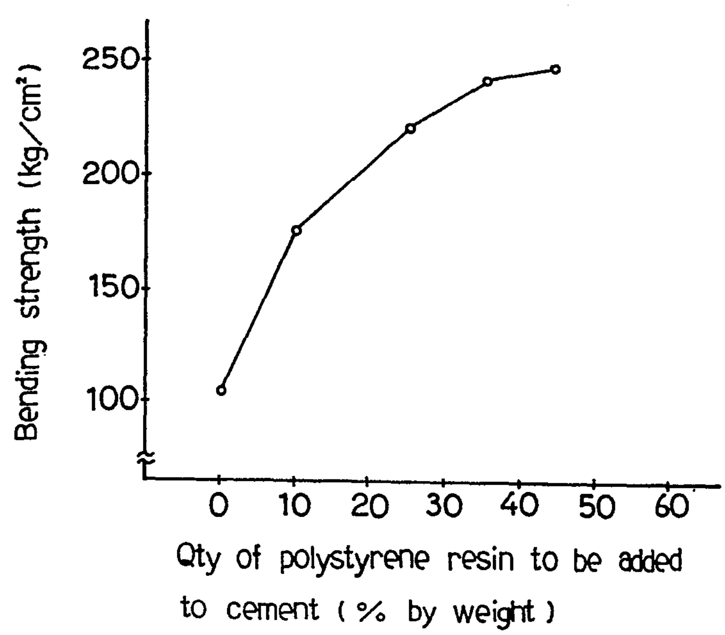
Bending strength (kg/cm²)
250
200
150
100
0
10
20
30
40
50
60
Qty of polystyrene resin to be added
to cement (% by weight)

FIG.3

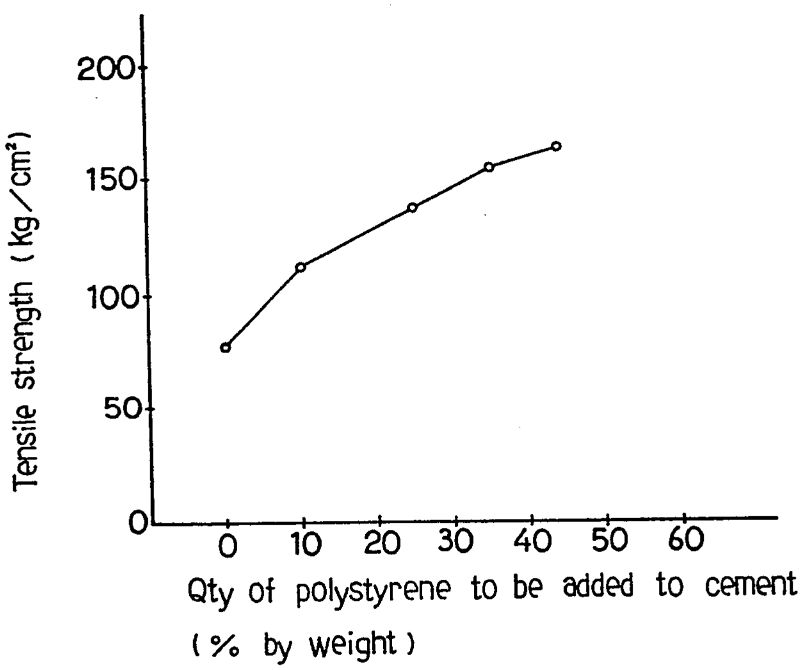
200
150
100
50
0
Tensile strength (Kg/cm²)
0
10
20
30
40
50
60
Qty of polystyrene to be added to cement
(% by weight)

FIG.4

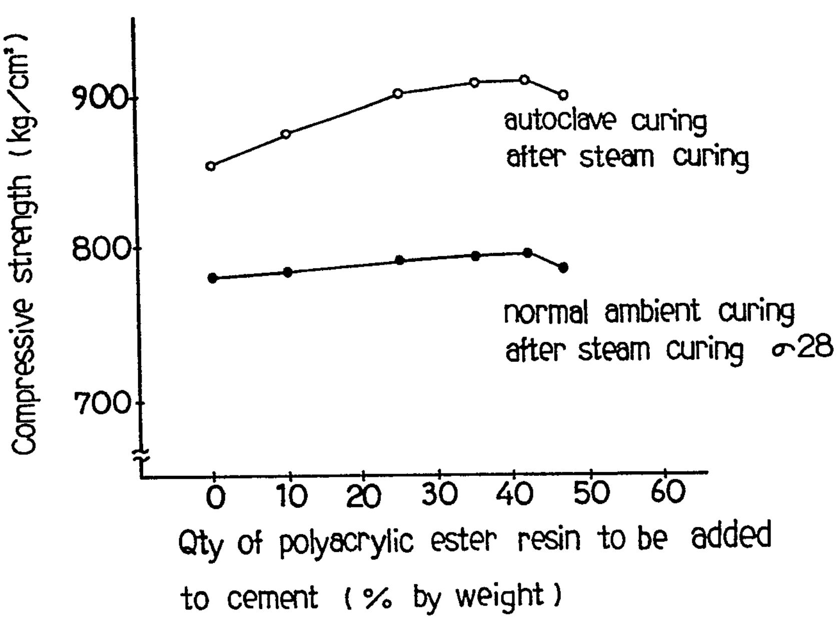
900
800
700
Compressive strength (Kg/cm²)
autoclave curing
after steam curing
normal ambient curing
after steam curing σ28
0
10
20
30
40
50
60
Qty of polyacrylic ester resin to be added
to cement (% by weight)

# FIG.5

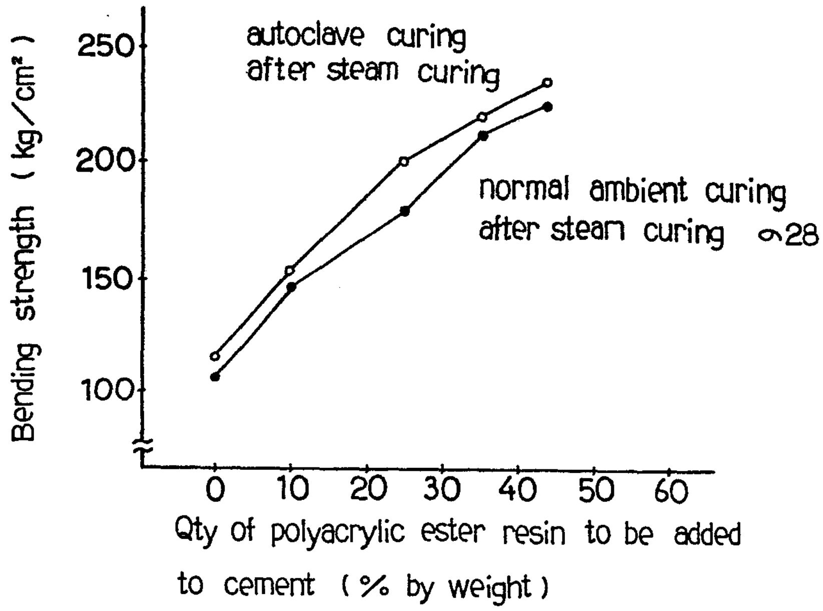
Bending strength ( kg/cm² )
250
200
150
100
autoclave curing
after steam curing
normal ambient curing
after steam curing σ28
0
10
20
30
40
50
60
Qty of polyacrylic ester resin to be added
to cement ( % by weight )

# FIG.6

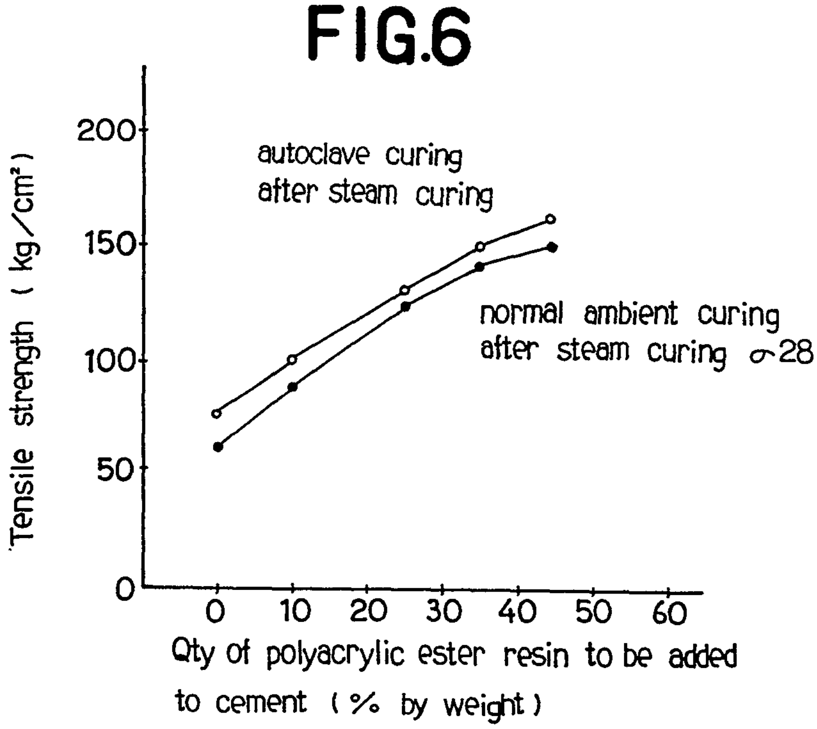
Tensile strength ( kg/cm² )
200
150
100
50
0
autoclave curing
after steam curing
normal ambient curing
after steam curing σ28
0
10
20
30
40
50
60
Qty of polyacrylic ester resin to be added
to cement ( % by weight )

European Patent Office

# EUROPEAN SEARCH REPORT

0083145
Application number

EP 82 30 3399

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-1 388 349 (I.C.I) *Claims 1-21* | 1-5 | C 04 B 13/24 |
| X | CHEMICAL ABSTRACTS, vol. 87, 1977, page 251, no. 156247t, Columbus Ohio (USA); & JP - A - 77 62 332 (ASAHI CHEMICAL INDUSTRY CO., LTD.) (23-05-1977) *Abstract* | 1-5 | |

TECHNICAL FIELDS SEARCHED (Int. Cl. 3)

C 04 B

The present search report has been drawn up for all claims

| Place of search | Date of completion of the search | Examiner |
|---|---|---|
| THE HAGUE | 28-02-1983 | STANGE R.L.H |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82